# EUROPEAN PATENT SPECIFICATION

(11) **EP 1 489 026 B1**
(45) Date of publication and mention of the grant of the patent: **14.06.2006**
(21) Application number: 04252435.5
(22) Date of filing: 27.04.2004
(51) Int. Cl.: B65G 61/00

(54) **An automated system for storing pallets into and out of a warehouse**
Automatisches System zum Einbringen und Herausnehmen von Paletten aus einem Lager
Système automatique pour faire entrer ou sortir des palettes dans un depot

(30) Priority: 19.06.2003 KR 2003039747
(43) Date of publication of application: 22.12.2004
(73) Proprietor: Hankook Tire Co., Ltd, Gangnam-Gu Seoul 135-723 (KR)
(72) Inventor: Kim, Jae Hee, Geumsan-gun, Chungcheongnam-do 312-802 (KR); Mim, Yong Gi, Daejeon 302-782 (KR)
(74) Representative: Browne, Robin Forsythe

(56) References cited:
- EP-A- 1 059 246
- US-A- 4 610 592
- US-A- 4 993 906
- US-A- 5 631 028

## Description

The present invention relates to an automated system for storing pallets for loading green tires. The system puts the pallets into and takes the pallets out of a warehouse which automatically stores the pallets on which the green tires are loaded. The system puts pallets into and takes the pallets out of a warehouse which stores pallets awaiting the green tires. The green tires are manufactured by assembling various half-finished products in a building machine using a forming process. When the tires have been manufactured the tires are introduced into a vulcanizing machine which uses a subsequent vulcanizing process.

In general, a process for manufacturing the tires involves assembling various half-finished products in a building machine using a forming process. The green tires are stored and the green tires are then vulcanized in a vulcanizing machine using a subsequent vulcanizing process. The stored green tires are transferred to the vulcanizing machine on request of the vulcanizing machine. The green tires are then subjected to the vulcanizing process to form the finished tires.

In the storage place for the green tires, it is important to classify and store the green tires according to the size of the green tire to enable the green tires to first-in, first-out. Also, an important factor in maintaining a production balance between a production plan in the forming process and a vulcanisation plan in the vulcanizing process is the area required to store green tires.

A method for storing the green tires can be divided into two methods, ie. a manual storage method and an automatic storage method. The manual storage method is a method in which the green tires are loaded on a separate carrier or pallet and handled by a worker. The automatic storage method (e.g. see document EP-A-1059246), is a method in which the work performed by the worker is automated to reduce the labour load of the worker. In particular, safety problems may occur when the worker handles the tires directly and the tire has a large size and is heavy in weight.

Also, taking into consideration the characteristics of rubber products, the first-in, first-out work for the tire should be performed. However, in cases where the worker handles the green tires there are drawbacks in that the first-in, first-out work is not carried out smoothly and the production lead time as a whole is lengthened so that the productivity is also lowered.

The above problems in the green tire management process when operated manually are solved by a conventional automated storage system using a rack building and a stacker crane. This system comprises a rack capable of storing the green tires individually as a single unit and a stacker crane which can automatically convey the green tires and store them by forming a passage between the racks. As compared with the manual storage method, the automated storage method is capable of saving the space required in the process.

In general, the manual storage method requires a great amount of space owing to horizontal storage. However, the automated storage method uses a stacker crane which can not only store the green tires horizontally but can also utilize the space so that the stacking efficiency is high.

However, although the method for automatically storing the green tires using a stacker crane has a higher stacking efficiency than the manually storing method, the method for automatically storing the green tires using a stacker crane has the following problems:

When the green tires are automatically stored in the limited space it is difficult to satisfy the desired storage ability and processing rate of warehousing and taking tires out of the warehouse. The above method can also make inroads into the working sphere of other equipment or other workers. In particular, it is difficult to install and to use the racks under certain conditions such as low ceilings, obstructions and narrow spaces in the building or plant.

The present invention is contemplated to solve the above problems of the prior art. An object of the present invention is to provide an automated system for storing pallets for loading green tires and putting the pallets into and taking the pallets out of the warehouse. The present invention can increase the process ability of putting the green tires into and taking the green tires out of a warehouse having limited space in situ. The present invention can also maximise the stacking ability for storing the green tires to enhance the efficiency of space utilization. The interference of working spheres caused by the present invention putting the green tires into and taking the green tires out of the warehouse is minimized.

In order to achieve the above object, the automated system according to the present invention comprises a conveyor section for putting pallets on which green tires are loaded into a warehouse; a conveyor section for taking pallets on which green tires are loaded out of a warehouse; a gantry robot section which is capable of being operated in the directions of the X-axis, Y-axis and Z-axis for putting the pallets into or taking the pallets out of the warehouse.

Hereinafter, an embodiment of the present invention will be described in detail with reference to the accompanying drawings.
Figure 1 is a perspective view showing the overall structure of the automated system according to the present invention in which the system automatically stores the pallets for loading green tires and puts the pallets into and takes the pallets out of a warehouse;
Figure 2 is an enlarged perspective view of the pallet which is used with the automated system of the present invention; and
Figure 3 is a side view of the pallet shown in Figure 2.

An automated system according to the present invention comprises a conveyor section 3 for putting the pallets 2 on which a green tire 1 which has been subjected to a forming process has been loaded into a warehouse. A conveyor section 4 is used to transport the pallet 2 out of the warehouse. A gantry robot section 5 transfers the pallet 2 which is to be taken out of the warehouse onto conveyor section 4. The gantry robot 5 is operated in the directions of the X-axis, Y-axis and Z-axis so that the pallet 2 is selectively transferred and positioned. After the pallet 2 has been taken out of the warehouse the pallet 2 is transferred to a location where the warehoused pallet 2 is stacked and stored.

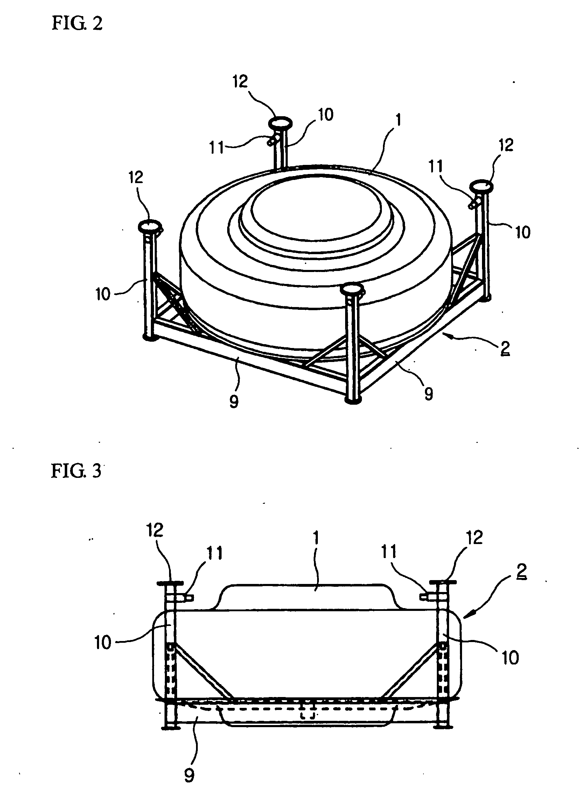

As shown in Fig. 2 and Fig 3 handles are provided at posts 10 mounted vertically onto the four corners of a base frame 9, respectively of the pallet 2. The gantry robot section 5 can therefore handle the pallet 2 when the gantry robot section 5 is moved in the direction of the Z-axis.

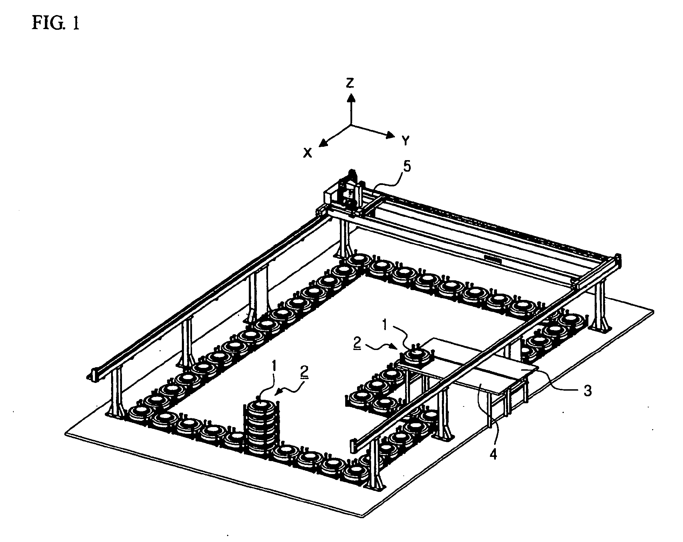

Each post 10 of the pallet 2 has an upper cap 12 mounted onto the upper surface thereof so as to enable the pallets 2 to be stacked in multi layers as shown in Fig 1.

A process for putting the pallet into and taking the pallet out of a warehouse using an automated system according to the present invention is as follows:

The pallet 2 having a green tire loaded thereon is supplied as a single unit as shown in Fig. 2 to the conveyor section 3 which puts the pallet into the warehouse as shown in Fig. 1. When the pallet 2 reaches the end of the conveyor section 3 a conventional inventory control system matches the information about the size of the tire 1 which has been put into the warehouse with the information as to where the green tire 1 should be stacked using the gantry robot section 5. Then, the gantry robot section 5 receives a stacking command from the inventory control system to transfer the pallet 2 to a predetermined stacking location. The gantry robot section 5 is moved in the directions of the X-axis, Y-axis and Z-axis to transfer the pallet 2 to the stacking and storing location.

Also, if necessary the above pallets 2 can be stacked in multi layers when the pallets 2 are stacked and stored.

On the other hand, when the pallet 2 is taken out of the warehouse, the inventory control system receives information on the size of the green tire 1 which is required to be transported to the vulcanizing machine to be used in the vulcanizing process. According to the received information, the inventory control system commands the gantry robot section 5 to take the corresponding green tire 1 out of the warehouse. As described above, the gantry robot section 5 is moved to a corresponding location and lifts the pallet 2 on which the green tire 1 is loaded, and then transfers the pallet 2 to the conveyor section 4 for taking the pallet 2 out of the warehouse.

According to the present invention, the following effects can be achieved:
Firstly, the labour load of the worker may be decreased remarkably so that the productivity and efficiency of the labour may be increased. Secondly, the present invention allows the space to be utilized more efficiently for automatically storing the green tires so that the limited space may be maximized. Thirdly, it is possible to maintain the uniform quality of the green tires by developing a pallet which is capable of storing the green tires without transforming the shape. Fourthly, the long term storage or unnecessary stock of green tires may be prevented in advance by the first-in, first-out management in real time and on-line stock of green tires to enable the cost of production of tires to be reduced.

It is intended that the embodiment of the present invention described above and illustrated in the accompanying drawings should not be construed as limiting the technical spirit of the present invention. The scope of the present invention is defined only by the appended claims. Those skilled in the art can make various changes and modifications thereto which will fall within the scope of the present invention.

## Claims

1. An automated system for storing pallets (2) for loading green tires (1) and putting said pallets (2) into and out of a warehouse, in which the system comprises:
a conveyor section (3) for putting a pallet (2) on which a green tire (1) which has been subject to a forming process is loaded into the warehouse;
a gantry robot section (5) which is capable of operating in the directions of the X-axis, Y-axis and Z-axis for putting said pallet (2) into or taking said pallet (2) out of the warehouse; and
a conveyor section (4) for taking the pallet (2) which has been transported by the gantry robot section (5) out of the warehouse;
**characterized in that** the pallet (2) has handles (11) provided at posts (10) mounted vertically onto four corners of a base frame (9) so that the gantry robot section (5) can handle the pallet (2) when the gantry robot section (5) is moved in the direction of the Z-axis; and each post (10) has an upper cap (12) mounted onto the upper surface thereof so that the pallets can be stacked in multiple layers.

## Patentansprüche

1. Ein automatisiertes System zur Lagerung von Paletten (2) zur Beladung mit Reifenrohlingen (1) und zum Verbringen der Paletten (2) in ein und aus einem Lager, wobei das System aufweist:
einen Beförderungsabschnitt (3) zum Verbringen einer Palette (2), auf welcher ein Reifenrohling (1), der einem Aufbauprozeß ausgesetzt war, geladen ist, in ein Lager;
einen Portalroboterabschnitt (5), der dazu in der Lage ist, in den Richtungen der X-Achse, Y-Achse und Z-Achse zu arbeiten, um die Palette (2) in das Lager zu verbringen oder die Palette (2) aus diesem zu entnehmen; und
einen Beförderungsabschnitt (4) zur Entnahme der Palette (2), die durch den Portalroboterabschnitt (5) aus dem Lager transportiert wurde;
**dadurch gekennzeichnet, daß** die Palette (2) Griffe (11) aufweist, die an Pfosten (10) vorgesehen sind, die vertikal an vier Ecken eines Basisrahmens (9) montiert sind, so daß der Portalroboterabschnitt (5) die Palette (2) handhaben kann, wenn der Portalroboterabschnitt (5) in die Richtung der Z-Achse bewegt wird, und jeder Pfosten (10) eine obere Kappe (12) hat, die auf die obere Oberfläche von ihm montiert ist, so daß die Paletten in mehreren Lagen gestapelt werden können.

## Revendications

1. Système automatisé de stockage de palettes (2) destinées à charger des pneus verts (1) et à rentrer et sortir les palettes (2) d'un entrepôt, dans lequel le système comprend :
une section de transport (3) permettant de rentrer dans l'entrepôt une palette (2) sur laquelle est chargé un pneu vert (1) qui a été soumis à un procédé de formage ;
une section formant robot portique (5) susceptible de fonctionner dans les directions de l'axe des X, l'axe des Y et l'axe des Z, permettant de rentrer la palette (2) dans l'entrepôt ou de l'en sortir ; et
une section de transport (4) permettant de sortir de l'entrepôt la palette (2) qui a été transportée par la section formant robot portique (5) ;
**caractérisé en ce que** la palette (2) comporte des poignées (11) prévues sur des montants (10) montés verticalement sur les quatre coins d'un châssis de base (9) afin que la section formant robot portique (5) puisse manipuler la palette (2) lorsque la section formant robot portique (5) est déplacée dans la direction de l'axe des Z ;
et **en ce que** chaque montant (10) présente un capuchon (12) supérieur monté sur sa surface supérieure afin que les palettes puissent être empilées pour former des couches multiples.
